# EUROPEAN PATENT SPECIFICATION

(11) **EP 2 216 706 B1**
(45) Date of publication and mention of the grant of the patent: **03.08.2011**
(21) Application number: 09152174.0
(22) Date of filing: 05.02.2009
(51) Int. Cl.: G06F 3/033

(54) **Diagonal movement of a trackball for optimized navigation**
Diagonalbewegung eines Trackballs für optimierte Navigation
Mouvement diagonal d'une boule de commande pour optimiser la navigation

(43) Date of publication of application: 11.08.2010
(73) Proprietor: RESEARCH IN MOTION LIMITED, Waterloo, Ontario N2L 3W8 (CA)
(72) Inventor: Venkatasubramanian, Parvathy, Kanata K2K 3K1, Ontario (CA)
(74) Representative: Hibbert, Juliet Jane Grace

(56) References cited:
- EP-A- 1 715 406
- US-A1- 2005 184 962
- US-A1- 2007 209 024
- "DECODING TECHNIQUE FOR GENERATING AN ARBITRARY ANGLE FROM OUTPUTS OF A POINTING DEVICE" IBM TECHNICAL DISCLOSURE BULLETIN, IBM CORP. NEW YORK, US, vol. 37, no. 1, 1 January 1994 (1994-01-01), page 355, XP000428805 ISSN: 0018-8689

## Description

### FIELD OF TECHNOLOGY

[0001] The present disclosure relates generally to navigational input devices. More specifically, the present disclosure relates to navigational input having diagonal movement for optimized navigation.

### BACKGROUND

With the advent of more robust wireless communications systems, compatible handheld communication devices are becoming more prevalent, as well as advanced. Where in the past such handheld communication devices typically accommodated either voice transmission (cell phones) or text transmission (pagers and PDAs), today's consumer often demands a combination device capable of performing both types of transmissions, including even sending and receiving e-mail. Furthermore, these higher-performance devices can also be capable of sending and receiving other types of data including that which allows the viewing and use of Internet websites. These higher level functionalities necessarily require greater user interaction with the devices through included user interfaces (UIs) which may have originally been designed to accommodate making and receiving telephone calls and sending messages over a related Short Messaging Service (SMS). As might be expected, suppliers of such mobile communication devices and the related service providers are anxious to meet these customer requirements, but the demands of these more advanced functionalities have in many circumstances rendered the traditional user interlaces unsatisfactory, a situation that has caused designers to have to improve the UIs through which users input information and control these sophisticated operations.

Many mobile devices have an input device for navigation through the graphical user interface. These interfaces include such devices as trackballs and rotating wheels which can be used to affect movement of a cursor or pointer, or to scroll up, down and about a displayed page. Movement of the cursor on the display screen is often broken down into horizontal (x) and vertical (y) components. For example, in known navigational input devices, diagonal movement can be sensed by the input device, but that movement is then translated into corresponding x and y displacements. A cursor on the display screen is then moved according to the x and y displacements. This type of input device consumes a longer time to move from the top corner of the display screen to the bottom corner of the display screen because of the step-wise pattern of x and γ-coordinates. Furthermore, there is a delay in movement of the input device and the displayed movement of a cursor or pointer because the device needs to execute an algorithm to translate the diagonal movement of the input device into x and y displacements of the cursor or pointer.
US patent application publication no. 2007/209024 describes an arrangement for affecting diagonal movement of a cursor on a display screen of a handheld communication device having a reduced alphabetic keyboard. The method includes sensing movement at an auxiliary user input of the handheld communication device indicative of the user's desire to affect diagonal movement of the cursor on the display screen of the handheld communication device. X-direction signals and Y-direction signals are produced based on the sensed movement at the auxiliary user input. During that time while the necessary signals are being collected and processed, the cursor is held steady on the display screen until a predetermined criterion is met for discriminating whether the user has indicated x-direction cursor movement, γ-direction cursor movement or diagonal cursor movement.
US patent application publication no. 2005/184962 describes a track ball/ structure for controlling movements of a cursor, the track ball comprising a body, a capacity in the body, a track ball housed in the capacity having a portion exposed outside the capacity for controlling the movements of the cursor, and a plurality of sensors located in the capacity surrounding the track ball for detecting pressure directions. The track ball is rollable continuously in a selected direction to compress the sensors so that the cursor is moved continuously in the selected direction.

Therefore, there is a need for a simpler and more efficient navigational input device that can sense diagonal movement of the input device and output corresponding diagonal movement of a cursor or pointer on a display screen for optimized navigation. This need is met by the present invention as defined by the independent claims.

### BRIEF DESCRIPTION OF THE DRAWINGS

Embodiments of the present invention will now be described, by way of example only, with reference to the attached Figures, wherein:

FIG. 1 is a handheld communication device configured according to the present disclosure as it is cradled in the palm of a user's hand;

FIG. 2 is a block diagram representing a wireless handheld communication device interacting in a communication network;

FIG. 3 is an exploded view of an exemplary handheld wireless device incorporating a trackball assembly as an auxiliary input;

FIG. 4 is a plan view of an exemplary trackball assembly having a trackball configured with roll-direction detectors;

FIG. 5A is a schematic representation of a trackball assembly configured with roll-direction detectors;

FIG. 5B is a schematic representation of the trackball assembly depicted in FIG. 5A as shown with the corresponding rotational axes of the roll-direction detectors;

FIG. 6 is a perspective view of an exemplary handheld communication device cradled in a user's hand and displaying an area of four icons on a display thereof with the icon labeled "1" highlighted; and

FIG. 7 is a perspective view of the exemplary handheld communication device depicted in FIG. 6 with the icon labelled "4" highlighted.

### DETAILED DESCRIPTION

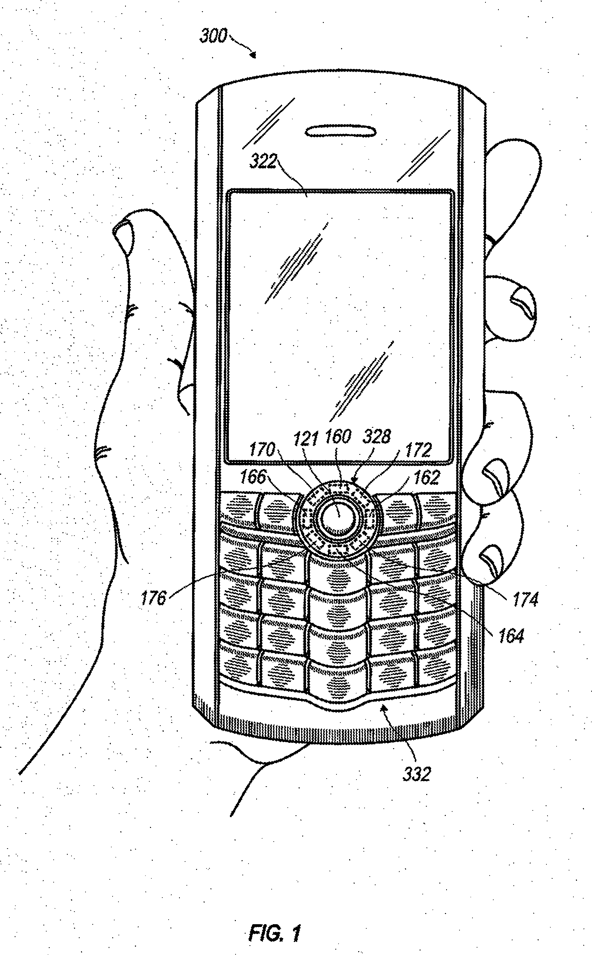

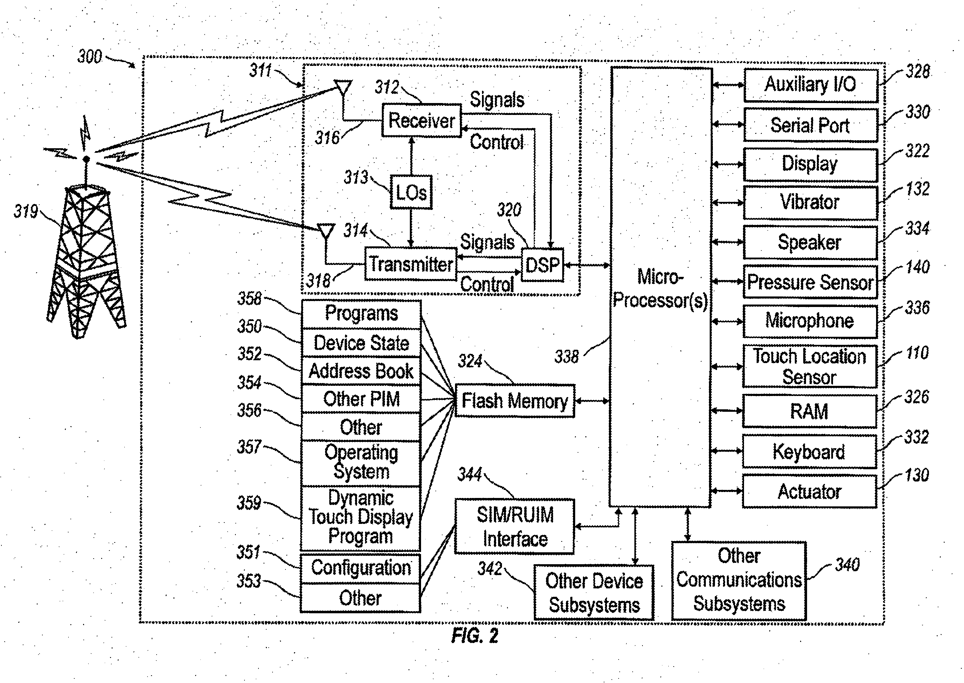

An exemplary handheld electronic device 300 such as is shown in FIG. 1 and the device's cooperation in a wireless network 319 is exemplified in the block diagram of FIG. 2. These figures are exemplary only, and those persons skilled in the art will appreciate the additional elements and modifications necessary to make the device 300 work in particular network environments.

This disclosure concerns methods and arrangements for adjusting the sensitivity of on-screen cursor movement in response to user actuation of a navigation tool, preferably in the form of a trackball-based navigation tool. The navigation tool enables a user to navigate the screen view on the handheld electronic device. While the disclosure below is often couched in terms of a trackball, the concept can also be applied to other navigational tools such as joysticks.

One typical way in which on-screen navigation can be described is in relation to a cursor. The motion of the navigation tool 328 commands a cursor to move on the display screen 322 of a handheld electronic device 300. While "cursor" movement is referred to herein, it shall be appreciated that any resultant motion that is directed by the navigation tool 328 is contemplated. Other such motions include but are not limited to scrolling down through a view on a webpage and scrolling through menu options. It should be appreciated that all such types of navigational motion on the display screen 322 is exemplarily described herein in terms of a cursor's (such as a pointing arrow) movement across a display screen 322; however, those persons skilled in the art will also appreciate that "cursor" movement or navigation on a screen can also be descriptive of successively highlighting presented menu items, screen icons and the like.

As used herein, the term handheld electronic device describes a relatively small device that is capable of being held in a user's hand. It is a broader term that includes devices that arc further classified as handheld communication devices, which interact with a communications network.

As shown in the block diagram of FIG. 2, the electronic device 300 includes a microprocessor 338 that controls the operation of the electronic device 300. A communication subsystem 311 performs all communication transmission and reception with the wireless network 319. The microprocessor 338 further can be connected with an auxiliary input/output (I/O) subsystem 328 which can be connected to the device 300. Additionally in at least one embodiment, the microprocessor 338 can be connected to a serial port (for example, a Universal Serial Bus port) 330 which can allow for communication with other devices or systems via the serial port 330. A display 322 can be connected to microprocessor 33R to allow for displaying of information to an operator of the device 300. When the electronic device 300 is equipped with a keyboard 332, which may be physical or virtual, the keyboard 332 can also be connected with the microprocessor 338. The electronic device 300 can include a speaker 334, a microphone 336, random access memory 326 (RAM), and flash memory 324, all of which may be connected to the microprocessor 338. Additionally, a vibrator 132, which can be a vibrator motor, can be connected with the microprocessor 338 to generate vibrations in the electronic device 300. Other similar components may be provided on the device 300 as well and optionally connected to the microprocessor 338. Other communication subsystems 340 and other communication device subsystems 342 are generally indicated as being functionally connected with the microprocessor 338 as well. An example of a communication subsystem 340 is that of a short range communication system such as BLUETOOTH® communication module or a WI-FI® communication module (a communication module in compliance with IEEE 802.11b) and associated circuits and components. Additionally, the microprocessor 338 is able to perform operating system functions and enables execution of programs on the electronic device 300. In some embodiments not all of the above components may be included in the electronic device 300. For example, in at least one embodiment the keyboard 332 is not provided as a separate component and is instead integrated with a touch-sensitive display as described below.

The included auxiliary I/O subsystem 328 can take the form of a variety of different navigation tools such as a trackball 121 based device or a joystick, just as examples. These navigation tools are preferably located on the front surface of the device 300 but may be located on any exterior surface of the device 300. Other auxiliary I/O devices can include external display devices and externally connected keyboards (not shown). While the above examples have been provided in relation to the auxiliary I/O subsystem 328, other subsystems capable of providing input or receiving output from the handheld electronic device 300 are considered within the scope of this disclosure. Additionally, other keys may be placed along the side of the device 300 to function as escape keys, volume control keys, scrolling keys, power switches, or user programmable keys, and may likewise be programmed accordingly.

As may be appreciated from FIG. 1, the handheld communication device 300 comprises a lighted display 322 located above a keyboard 332 suitable for accommodating textual input to the handheld communication device 300 when in an operable configuration. As shown, the device 300 is of unibody construction, also known as a "candy-bar" design. In other embodiments, the device 300 could be a flip-type phone or a slider-type as well.

Keys, typically of a push-button or push-pad nature, perform well as data entry devices but present problems to the user when they must also be used to affect navigational control over a screen-cursor. In order to solve this problem the present handheld electronic device 300 preferably includes a trackball assembly 328 which is exteriorly located upon the front face of the device 300. Its front face location is particularly advantageous because it makes the tool easily thumb-actuable like the keys of the keyboard 332. A particularly usable embodiment provides the navigational tool in the form of a trackball 121 which is easily utilized to instruct screen cursor movement in substantially any direction, as well as act as an actuator when the ball 121 is depressed like a button. The placement of the trackball 121 is preferably above the keyboard 332 and below the display screen 322; here, it avoids interference during keyboarding and does not block the user's view of the display screen 322 during use.

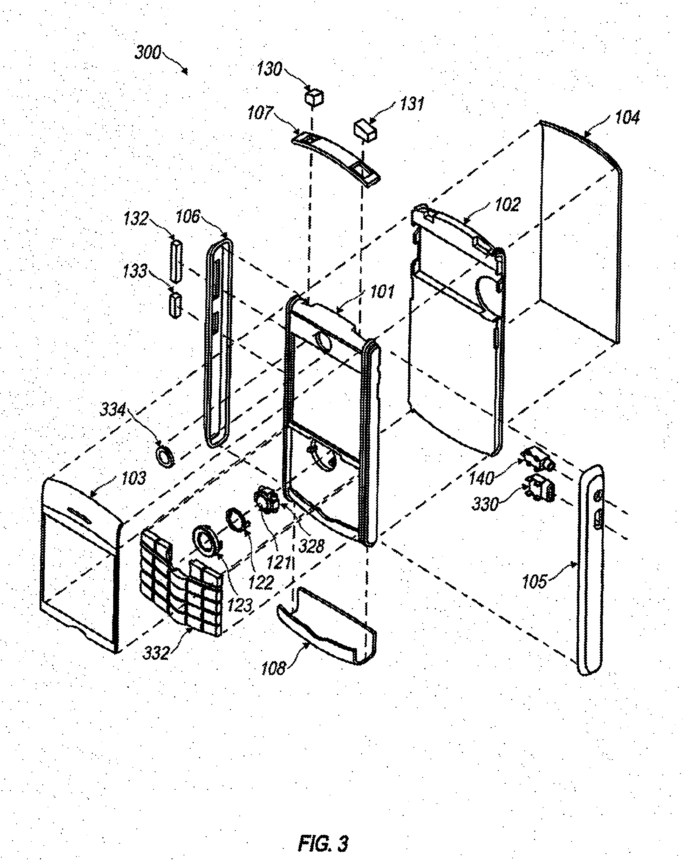

The integration of the Trackball assembly 328 into handheld device 300 can be seen in the exploded view of FIG. 3 showing some of the typical components found in the assembly of the handheld electronic device 300. The trackball assembly 328 is frictionally engaged with a housing or support frame 101, but in an alternative embodiment the trackball assembly 328 can be removable when the device is assembled. This allows for replacement of the trackball assembly 328 if/when it becomes damaged or the user desires replacement with a different type of navigation tool 328. When the trackball assembly 328 has a ball 121, the ball 121 itself can be removed without removal of the navigation tool 328. The removal of the ball 121 is enabled through the use of an outer removable ring 123 and an inner removable ring 122. These rings 122, 123 ensure that the trackball assembly 328 and the ball 121 are properly held in place against the support frame 101.

A serial port (preferably a Universal Serial Bus port) 330 and an earphone jack 140 are fixably attached to the device 300 and further held in place by right side element 105. Buttons 130-133 are attached to switches (not shown), which are connected to the device 300.

Final assembly involves placing the top piece 103 and bottom piece 104 in contact with support frame 101. Furthermore, the assembly interconnects right side element 105 and left side element 106 with the support frame 101. These side elements 106, 105 provide additional protection and strength to the support structure of the device 300. In a preferred embodiment, backplate 104 is removably attached to the other elements of the device.

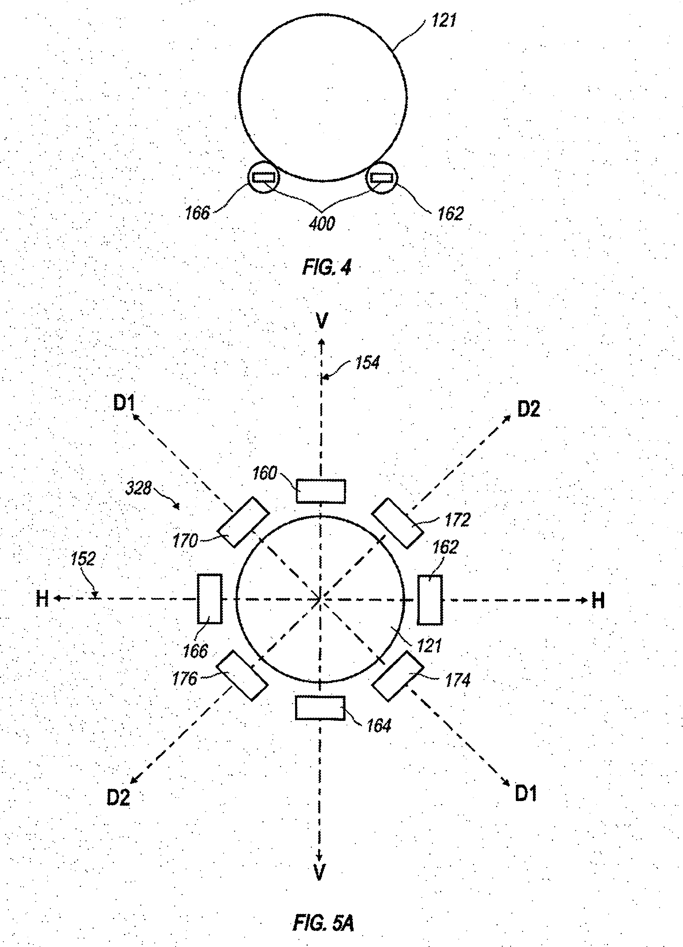

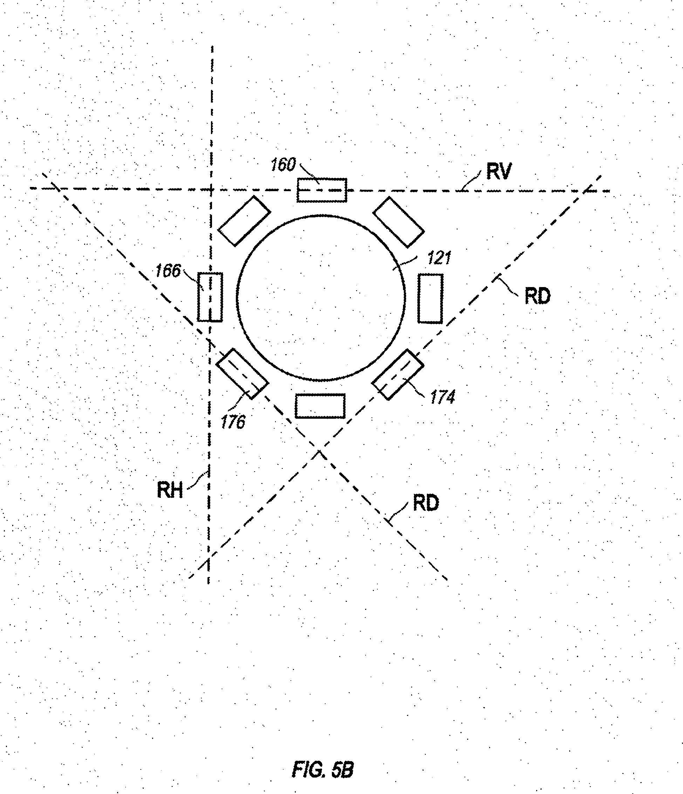

FIGS. 4 and 5A and 5B are detailed illustrations of the trackball-based cursor navigation tool 328. Motion of the trackball 121 is assessed using a plurality of roll-direction detectors 160, 162, 164, 166, 170, 172, 174, 176, such as rollers. Each of these roll-direction detectors 160, 162, 164, 166, 170, 172, 174, 176 engage the trackball 121 and are actuated by one of vertical, horizontal, and diagonal rotation of the Trackball 121 relative to the display screen. FIG. 4 depicts an exemplary embodiment of how a pair of roll-direction detectors 162 and 166 can engage the trackball 121.

Returning to FIG. 3, the trackball assembly 328 and roll-direction detectors can be positioned on the front face of the handheld communication device 300. The trackball assembly 328 is supported within the frame 101 of the handheld communication device 300 and can be additionally supported by the roll-direction detectors 160, 162, 164, 166, 170, 172, 174, 176. The roll-direction detectors 160, 162, 164, 166, 170, 172, 174, 176 can be positioned radially about the center of the trackball 121. For example, with eight roll-direction detectors 160, 162, 164, 166, 170, 172, 174, 176, the roll-direction detectors 160, 162, 164, 166, 170, 172, 174, 176 are spaced radially from the center of the trackball 121 so that there is a central angle of forty-five degrees (45°) between adjacent roll-direction detectors 160, 162, 164, 166, 170, 172, 174, 176. As depicted in FIG. 4, the roll-direction detectors 162 and 166 (160, 164, 170, 172, 174 not shown) are positioned such that they are beneath the trackball 121. In such configuration, the top surface of each of the roll-direction detectors 160, 162, 164, 166, 170, 172, 174, 176 are in contact engagement with the bottom surface of the trackball 121. However, the roll-direction detectors 160, 162, 164, 166, 170, 172, 174, 176 can be positioned in other orientations. Another such orientation is depicted in FIG. 5. Here, the roll-direction detectors 160, 162, 164, 166, 170, 172, 174, 176 are positioned laterally to the trackball 121. In this configuration, a side surface of the roll-direction detectors 160, 162, 164, 166, 170, 172, 174, 176 is in contact engagement with a side surface of the trackball 121.

The roll-direction detectors 160, 162, 164, 166, 170, 172. 174, 176 can be oriented around the trackball 121 such that each detector 160, 162, 164, 166, 170, 172, 174, 176 detects one kind of movement, such as vertical, horizontal, or diagonal movement. The roll-direction detectors 160, 162, 164, 166, 170, 172, 174, 176 comprise rollers that are in contact engagement with the trackball 121 and rotatable about a rotational axis. Sensors 400 are also configured with the roll-direction detectors 160, 162, 164, 166, 170, 172, 174, 176 for sensing the amount of movement of the trackball 121 and for outputting a signal to a microprocessor (shown in FIG. 2 as 338) that is in signal communication with each of the roll-direction detectors 160, 162, 164, 166, 170, 172, 174, 176. The sensors 400 may be Hall-effect sensors, electromagnetic sensors, mechanical position sensors, or optical sensors. As depicted in FIG. 4, the sensors 400 can be integrated within the roll-direction detectors 160, 162, 164, 166, 170, 172, 174, 176. In other embodiments, the sensors can be positioned beneath each roll-direction detector 160, 162, 164, 166, 170, 172, 174, 176 such that a bottom surface of the roll-direction detector 160, 162, 164, 166, 170, 172, 174, 176 is in contact with a top surface of the sensors 400.

FIG. 5A shows an exemplary embodiment of the Trackball navigation tool having eight roll-direction detectors. As depicted, two vertical roll-direction detectors 160 and 164 are oriented on a vertical axis (V) of the Trackball 121. Two horizontal roll-direction detectors 162 and 166 are oriented on a horizontal axis (H) of the trackball. Four diagonal roll-direction detectors 170, 172, 174 and 176 are oriented on diagonal axes (D1 and D2). The diagonal roll-direction detectors 170 and 174 oriented on the diagonal axis D1 can detect movement that moves a cursor from a top left corner to a bottom right corner, and vice versa. The diagonal roll-direction detectors 172 and 176 oriented on the diagonal axis D2 can detect movement that moves a cursor from a top right corner to a bottom left corner, and vice versa.

FIG. 5B illustrates the axes of rotations for the roll-direction detectors. The vertical roll-direction detectors 160 and 164 (not shown) are rotatable about a horizontally oriented rotational axis relative to the display screen. As shown in FIG. 5B, vertical roll-direction detector 160 is rotatable about horizontally oriented rotational axis RV. The horizontal roll-direction detectors 162 (not shown) and 166 are rotatable about a vertically oriented rotational axis relative to the display screen. As shown in FIG. 5B, horizontal roll-direction detector 166 is rotatable about a vertically oriented rotational axis RH. The diagonal roll-direction detectors 170 (not shown), 172 (not shown), 174, and 176 are rotatable about a diagonal axis relative to the display screen. For example, as shown in FIG. 5B, vertical roll-direction detectors 176 and 174 are rotatable about diagonal axes RD.

Communication between the sensed trackball movement and the outputted cursor movement displayed on a display screen will now be described with respect to the roll-direction detector arrangement depicted in FIGS. 5A and 5B, but other embodiments and arrangements are considered within the scope of this disclosure. When the sensors 400 of the roll-direction detectors 160, 162, 164, 166, 170, 172, 174, 176 output signals to the microprocessor 338, the microprocessor 338 determines whether primarily vertical, horizontal, or diagonal rotation of the trackball 121 has been detected. When this determination has been made, the microprocessor 338 outputs a corresponding control signal to a screen cursor controller which affects corresponding vertical, horizontal or diagonal cursor movement on the display screen 322. For example, the microprocessor 338 can detect a diagonal movement value (Da), a vertical movement value (Va), and a horizontal movement value (Ha). The microprocessor 338 then compares which movement is approximately greater and determines the primary rotation of the trackball 121. The values of the movements Da, Va, and Ha can then be compared against each other and against a threshold value to determine the direction of the movement, whether it be primary up, down, upwardly right, downwardly right, or the like. These determinations are then processed and translated into control signals corresponding to cursor movement. The translated control signals are then outputted to a screen cursor control to affect the movement of the cursor on the display screen.

Still referring to FIGS. 5A and 5B, for example, if Da = 10, Va = 8, and Ha = 7, this might indicate that the trackball 121 is coming into contact with the diagonal roll-direction detectors 170, 174 and vertical roll-direction detectors 160, 164 more than it is coming into contact with the horizontal roll-direction detectors 162, 166. Here, the microprocessor (not shown) can compare Da, Va, and Ha with allowance of a predetermined tolerance for each roll-direction detector 160, 162, 164, 166, 170, 172, 174, 176 to determine the primary movement of the trackball 121.

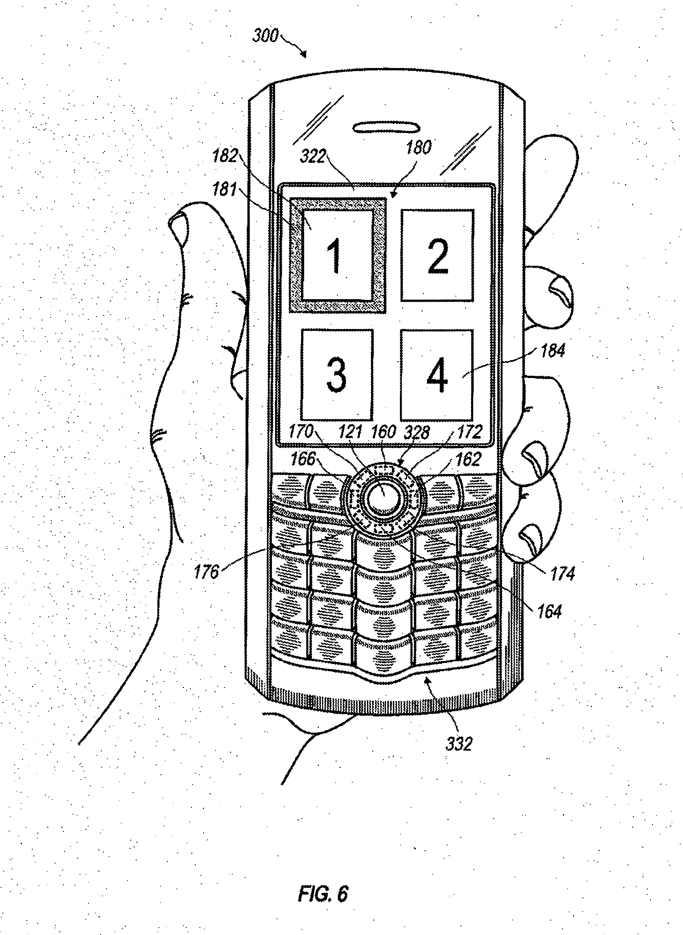

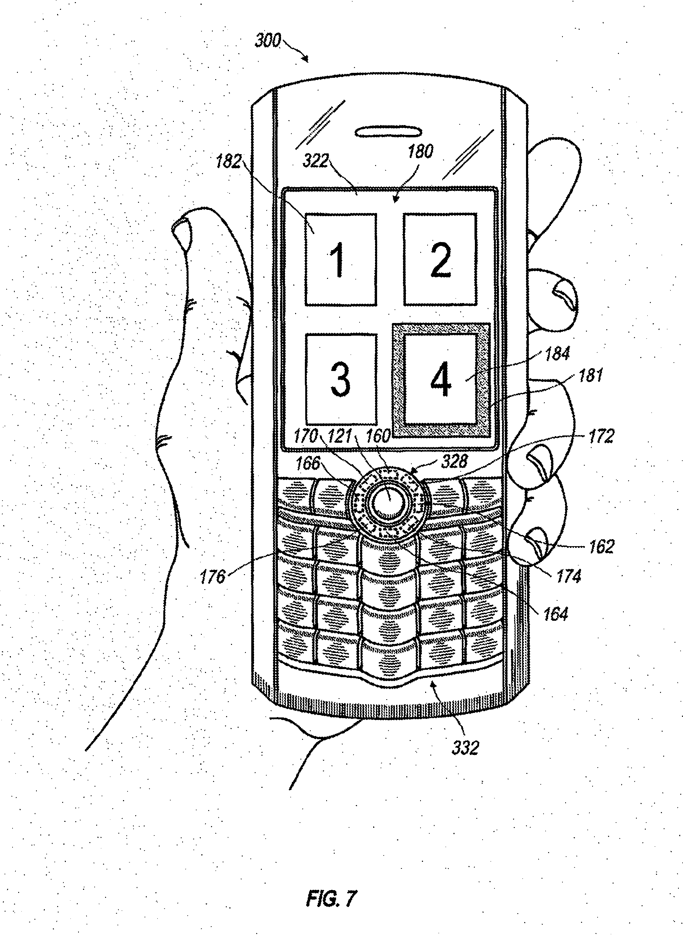

The trackball navigation tool 121 enables methods and arrangements for facilitating diagonal cursor movement in such environments as icon arrays 180 and spreadsheet grids on a display screen 322 of a relatively small, wireless handheld communication device 300, variously configured as described above, such as that depicted in FIGS. 6 and 7. One exemplary embodiment takes the form of a method for affecting movement of a cursor 181 on the display screen 322 of a handheld communication device 300. The method includes sensing movement at a trackball assembly 328 of the handheld communication device 300 indicative of the user's desire to affect diagonal movement of the cursor 181 on the display screen 322 of the handheld communication device 300. X-direction or horizontal signals (corresponding to RH-axis rotation), y-direction or vertical signals (corresponding to RV-axis rotation), and diagonal signals (corresponding to RD-axis rotation) are produced based on the sensed movement at the trackball assembly 328 by the sensors 400. During that time while the necessary signals are being collected and processed, the cursor 181 is held steady on the display screen 322 until the microprocessor determines whether the primary movement of the trackball 121 corresponds to x-direction cursor movement, y-direction cursor movement or diagonal cursor movement. For example, the cursor 181 can be kept steady or can maintain its current position for about 0.01 to 0.75 seconds as the microprocessor analyzes and processes the sensed movement of the Trackball 121 to produce corresponding cursor control signals. When the corresponding cursor control signals are generated, the cursor 181 is no longer held steady and no longer maintains its current position. Instead, the cursor 181 moves to the corresponding position indicated by the control signals.

In operation, a handheld communication device 300 as described can for example affect diagonal movement of a highlighting cursor 181 amongst an array of icons 180 on a display screen 322 of the handheld communication device 300. Roll-direction detectors 160, 162, 164, 166, 170, 172, 174, 176 are provided that are capable of sensing movement at the trackball assembly 328 indicative of the user's desire to affect diagonal movement of the highlighting cursor 181 from a currently highlighted icon number 182 on the display screen 322 to a diagonally located icon 184 on the display screen 322 of the handheld communication device 300. When the user rotates or actuates the trackball 121, the sensors of the roll-direction detectors 160, 162, 164, 168, 170, 172, 174, 176 produce either x-direction signals, y-direction signals, or diagonal signals based on the sensed movement at the Trackball assembly 328. A processor 338 is included that is capable of analyzing the produced x-direction signals, y-direction signals, and diagonal signals and is capable of outputting a cursor control signal that holds the highlighting cursor 181 steady on a presently highlighted icon 182 on the display screen 322 during the processing. When a predetermined criterion is met for discriminating whether the user has indicated movement to an icon left or right of the presently highlighted icon, above or below the presently highlighted icon 182, or diagonally positioned relative to the presently highlighted icon numeral 182, diagonal movement of the highlighting cursor 181 is affected between diagonally positioned icons on the display screen of the handheld communication device 300 when diagonal cursor movement is detected by the roll-direction detectors 160,162, 164, 166, 170, 172, 174, 176.

In another embodiment, the handheld device 300 described above can also affect diagonal movement of a cursor to travel across and scroll through a displayed webpage on the display screen 322 (not shown). The user can actuate the trackball 121 to control the movement of the cursor across the display screen 322. For example, if the user wishes to select a selectable item, such as a hyperlink, that is located at a bottom corner on a displayed webpage relative to where the cursor initially is, the user can actuate the trackball 121 diagonally to affect diagonal movement of the cursor. This can also be used to navigate through a displayed map on the display screen 322 or other interactive page displayed on the display screen 322.

In either of the above examples, the microprocessor receives the signals from the sensors 400 of the roll-direction detectors 160, 162, 164, 166, 170, 172, 174, 176. Again, these signals indicate the amount of movement sensed at each roll-direction detector 160, 162, 164, 166, 170, 172. 174, 176. The processor then analyzes the amount of movement at each roll-direction detector 160, 162, 164, 166, 170, 172, 174, 176 and compares the values to each other and against a threshold to determine the primary movement of the trackball 121. Once this determination is made, the microprocessor produces a cursor movement control signal to affect the movement of the cursor 181 on the display screen 322 according to the sensed movement of the trackball 121. Since movement of the cursor 181 is directly associated with a roll-direction detector, 160, 162, 164, 166, 170, 172, 174, 176, the microprocessor docs not need to translate the motion of the Trackball 121 into separate horizontal and vertical movements. The microprocessor requires fewer calculations and algorithms to output cursor movement based on trackball movement. With such roll-direction detectors 160, 162, 164, 166, 170, 172, 174, 176, less time is required to move a cursor on the display screen 322 from a top corner of the display screen to a bottom corner of the display screen. There is no need for the microprocessor to translate diagonal movements of the Trackball 121 into separate x and y or horizontal and vertical displacements to affect the cursor diagonally in a step-wise pattern. With the trackball assembly 328 as described herein, even with the predetermined waiting period or period that the cursor is held steady while the microprocessor analyzes the roll-direction detector signals, the delay in movement of the trackball 121 and the displaced movement of the cursor is decreased because the microprocessor does not need to execute an algorithm to translate diagonal movement of the trackball 121 into separate components.

A handheld communication device 300 disclosed herein that is capable of affecting diagonal movement of a cursor 181 on a display screen 322 comprises a display screen 322 located partially above a trackball-based cursor navigation tool 328. The trackball-based cursor navigational tool 328 comprises a partially exposed trackball 121 retained within a housing 101. The trackball 121 is freely rotatable within the housing 101. A plurality of trackball roll-direction detectors 160, 162, 164, 166, 170, 172, 174, 176 are provided for engaging the trackball 121 and are oriented radially about the center of the trackball 121. Each trackball roll-direction detector 160, 162, 164, 166, 170, 172, 174, 176 is primarily actuated by one of vertical, horizontal, and diagonal rotation of the Trackball 121 relative to the display screen 322. Each of the roll-direction detectors 160, 162, 164, 166, 170, 172, 174, 176 is configured to output a signal that is representative of an amount of sensed rotation of the trackball 121 in the respective vertical, horizontal or diagonal direction relative to the display screen 322. A microprocessor 338 is in signal communication with each of the trackball roll-direction detectors 160, 162, 164, 166, 170, 172, 174, 176. The microprocessor 338 is configured to receive the outputted signals of the roll-direction detectors 160, 162, 164, 166, 170, 172, 174, 176 and is configured to process the signals to determine whether primarily vertical, horizontal or diagonal rotation of the trackball 121 has been detected. The microprocessor 338 is also configured to output corresponding control signals to a screen cursor controller which affects corresponding vertical, horizontal or diagonal cursor movement upon the display screen 322.

Exemplary embodiments have been described hereinabove regarding both wireless handheld electronic devices, as well as the communication networks within which they cooperate. It should be appreciated, however, that a focus of the present disclosure is the output of diagonal movement of a trackball for optimized navigation.

## Claims

1. A trackball-based navigation tool (328) capable of affecting diagonal cursor movement on a display screen (322), said trackball-based navigation tool (328) comprising:
a partially exposed trackball (121) retained within a housing (101) and freely rotatable therein;
eight trackball roll-direction detectors (160, 162, 164, 166, 170, 172, 174, 176), each engaging the trackball (121) and each primarily actuated by one of vertical, horizontal and diagonal rotation of the trackball (121) relative to the display screen (322);
each of said detectors (160, 162, 164, 166, 170, 172, 174, 176) outputting a signal representative of an amount of sensed rotation of the trackball (121) in the respective vertical, horizontal or diagonal direction relative to the display screen (322) wherein the eight roll-direction detectors (160, 162, 164, 166, 170, 172, 174, 176) are spaced radially from a center of the trackball (121) such that there is a central angle of forty-five degrees between adjacent roll-direction detectors (160, 162, 164, 166, 170, 172, 174, 176); and
a microprocessor (338) in signal communication with each of said trackball roll-direction detectors (160, 162, 164, 166, 170, 172, 174, 176), said microprocessor (338) receiving said outputted signals from said detectors (160, 162, 164, 166, 170, 172, 174, 176) and directly comparing said outputted signals to determine whether primarily vertical, horizontal or diagonal rotation of the trackball (121) has been detected and outputting corresponding control signals to a screen cursor controller which affects corresponding vertical, horizontal or diagonal cursor movement upon the display screen (322); and
wherein each of said trackball roll-direction detectors (160, 162, 164, 166, 170, 172, 174, 176) comprises a roller in contact engagement with said trackball (121) and rotatable about a rotational axis thereof.

2. The trackball-based navigation tool as recited in claim 1, wherein each of the roll-direction detectors (160, 162, 164, 166, 170, 172, 174, 176) comprises a sensor (400) for sensing rotation of the trackball (121).

3. A handheld communication device comprising a trackball-based navigation tool as recited in claim 1 or 2.

4. A method of affecting horizontal, vertical, and diagonal cursor movement on a display screen (322) of a communication device (300) using a trackball-based navigation tool (328), said method comprising:
rotating a trackball (121) of the trackball-based navigation tool (328);
sensing the rotation of the trackball (121) of the trackball-based navigation tool (328) from at least one of eight trackball roll-direction detectors (160, 162, 164, 166, 170, 172, 174, 176), wherein each of the eight roll-direction detectors (160, 162, 164, 166, 170, 172, 174, 176) is primarily actuated by one of vertical, horizontal and diagonal rotation of the trackball (121) and wherein the eight roll-direction detectors (160, 162, 164, 166, 170, 172, 174, 176) are spaced radically from a center of the trackball (121) such that these is a central angle of forty-five degrees between adjacent roll-direction detectors
and each of said trackball roll-direction detectors (160, 162, 164, 166, 170, 172, 174, 176) comprises a roller in contact engagement with the trackball (121) of the trackball-based navigation tool (328) and rotatable about a rotational axis thereof;
outputting rotation signals correlating to the sensed rotation of the trackball (121) of the trackball-based navigation tool (121);
directly comparing the outputted rotation signals;
determining whether the rotation signals correspond to primarily a vertical, a horizontal, or a diagonal movement of the trackball (121) based on the direct comparison of the outputted rotation signals;
outputting cursor control signals based on the determined primary movement of the trackball (121) to indicate corresponding vertical, horizontal, or diagonal movement of the cursor (181) on the display screen (322); and
moving the cursor (181) on the display screen (322) in a direction corresponding to the cursor control signals.

## Patentansprüche

1. Trackball-basiertes Navigations-Tool (328), das eine diagonale Cursor-Bewegung auf einem Anzeigebildschirm (322) beeinflussen kann, wobei das Trackball-basierte Navigations-Tool (328) aufweist:
einen teilweise exponierten Trackball bzw. Rollkugel (121), der in einem Gehause (101) gehalten wird und darin frei rotierbar ist;
acht Trackball-Rollrichtungs-Detektoren (160, 162, 164, 166, 170, 172, 174, 176), die jeweils den Trackball (121) erfassen und jeweils primär durch eine einer vertikalen, horizontalen und diagonalen Rotation des Trackballs (121) relativ zu dem Anzeigebildschirm (322) betätigt werden;
wobei jeder der Detektoren (160, 162, 164, 166, 170, 172, 174, 176) ein Signal ausgibt, das repräsentativ ist für einen Umfang einer erfassten Rotation des Trackballs (121) in die jeweilige vertikale, horizontale und
diagonale Richtung relativ zu dem Anzeigebildschirm (322), wobei die acht Trackball-Rollrichtungs-Detektoren (160, 162, 164, 166, 170, 172, 174, 176) von einer Mitte des Trackballs (121) radial beabstandet sind derart, dass es einen Mittenwinkel von fünfundvierzig Grad zwischen angrenzenden Rollrichtungs-Detektoren (160, 162, 164, 166, 170, 172, 174, 176) gibt; und
einen Mikroprozessor (338) in Signalkommunikation mit jedem der Trackball-Rollrichtungs-Detektoren (160, 162, 164, 166, 170, 172, 174, 176), wobei der Mikroprozessor (338) die ausgegebenen Signale von den Detektoren (160, 162, 164, 166, 170, 172, 174, 176) empfängt und die ausgegebenen Signale direkt vergleicht, um zu bestimmen, ob primär eine vertikale, horizontale oder diagonale Rotation des Trackballs (121) erfasst wurde, und entsprechende Steuersignale an eine Bildschirm-Cursor-Steuervorrichtung ausgibt, die eine entsprechende vertikale, horizontale oder diagonale Cursor-Bewegung auf dem Anzeigebildschirm (322) beeinflusst; und
wobei jeder der Trackball-Rollrichtungs-Detektoren (160, 162, 164, 166, 170, 172, 174, 176) einen Roller aufweist in Kontakt mit dem Trackball (121) und rotierbar um dessen Rotationsachse.

2. Trackball-basiertes Navigations-Tool gemäß Anspruch 1, wobei jeder der Rollrichtungs-Detektoren (160, 162, 164, 166, 170, 172, 174, 176) einen Sensor (400) aufweist zum Erfassen einer Rotation des Trackballs (121).

3. Handgehaltene Kommunikationsvorrichtung, die ein Trackball-basiertes Navigations-Tool gemäß Anspruch 1 oder 2 aufweist.

4. Verfahren zum Beeinflussen einer horizontalen, vertikalen und diagonalen Cursor-Bewegung auf einem Anzeigebildschirm (322) einer Kommunikationsvorrichtung (300) unter Verwendung eines Trackball-basierten Navigations-Tools (328), wobei das Verfahren aufweist:
Rotieren eines Trackballs (121) des Trackball-basierten Navigations-Tools (328);
Erfassen der Rotation des Trackballs (121) des Trackball-basierten Navigations-Tools (328) von zumindest einem von acht Trackball-Rollrichtungs-Detektoren (160, 162, 164, 166, 170, 172, 174, 176), wobei jeder der acht Rollrichtungs-Detektoren primär betätigt wird durch eine einer vertikalen, horizontalen und diagonalen Rotation des Trackballs (121) und wobei die acht Trackball-Rollrichtungs-Detektoren (160, 162, 164, 166, 170, 172, 174, 176) von einer Mitte des Trackballs (121) radial beabstandet sind derart, dass es einen Steuerwinkel von fünfundvierzig Grad zwischen angrenzenden Roll-Detektoren gibt, und jeder der Trackball-Rollrichtungs-Detektoren (160, 162, 164, 166, 170, 172, 174, 176) einen Roller aufweist in Kontakt mit dem Trackball (121) des Trackball-basierten Navigations-Tools (328) und rotierbar um dessen Rotationsachse;
Ausgeben von Rotationssignalen, die der erfassten Rotation des Trackballs (121) des Trackball-basierten Navigations-Tools (121) entsprechen;
direktes Vergleichen der ausgegebenen Rotationssignale;
Bestimmen, ob die Rotationssignale primär einer vertikalen, einer horizontalen oder einer diagonalen Bewegung des Trackballs (121) entsprechen, basierend auf dem direkten Vergleich der ausgegebenen Rotationssignale;
Ausgeben von Cursor-Steuerungssignalen basierend auf der bestimmten primären Bewegung des Trackballs (121), um eine entsprechende vertikale, horizontale oder diagonale Bewegung des Cursors (181) auf dem Anzeigebildschirm (322) anzuzeigen; und
Bewegen des Cursors (181) auf dem Anzeigebildschirm (322) in eine Richtung, die den Cursor-Steuerungssignalen entspricht.

## Revendications

1. Outil de navigation à base de bille de commande (328), capable de commander le mouvement diagonal du curseur sur un écran d'affichage (322), ledit outil de navigation à base de bille de commande (328) comprenant :
une bille de commande (121) partiellement exposée, maintenue à l'intérieur d'un boîtier (101) et pouvant y tourner librement ;
huit détecteurs de direction de rotation de la bille de commande (160, 162, 164, 166, 170, 172, 174, 176), chacun coopérant avec la bille de commande (121) et chacun étant principalement actionné par une des rotations verticale, horizontale et diagonale de la bille de commande (121) par rapport à l'écran d'affichage (322) ;
chacun desdits détecteurs (160, 162, 164, 166, 170, 172, 174, 176) produisant en sortie un signal représentatif d'une ampleur de la rotation détectée de la bille de commande (121) respectivement dans la direction verticale, horizontale ou diagonale par rapport à l'écran d'affichage (322), dans lequel les huit détecteurs de direction de rotation de la bille de commande (160, 162, 164, 166, 170, 172, 174, 176) sont espacés radialement par rapport au centre de la bille de commande (121) de manière à ce qu'il existe un angle central de quarante cinq degrés entre des détecteurs de direction de rotation (160, 162, 164, 166, 170, 172, 174, 176) adjacents ; et
un microprocesseur (338) ayant établi une communication de signaux avec chacun des détecteurs de direction de rotation de la bille de commande (160, 162, 164, 166, 170, 172, 174, 176), ledit microprocesseur (338) recevant lesdits signaux produits en sortie desdits détecteurs (160, 162, 164, 166, 170, 172, 174, 176), comparant directement lesdits signaux produits en sortie afin de déterminer si une rotation principalement verticale, horizontale ou diagonale de la bille de commande (121) a été détectée et produisant en sortie des signaux de commande correspondants vers un contrôleur du curseur à l'écran qui commande un mouvement vertical, horizontal ou diagonal correspondant du curseur sur l'écran d'affichage (322) ; et
dans lequel chacun des détecteurs de direction de rotation de la bille de commande (160, 162, 164, 166, 170, 172, 174, 176) comprend un galet coopérant par contact avec ladite bille de commande (121) et pouvant tourner autour de son propre axe de rotation.

2. Outil de navigation à base de bille de commande selon la revendication 1, dans lequel chacun des détecteurs de direction de rotation (160, 162, 164, 166, 170, 172, 174, 176) comprend un capteur (400) destiné à détecter la rotation de la bille de commande (121).

3. Dispositif de communication portatif comprenant un outil de navigation à base de bille de commande selon la revendication 1 ou 2.

4. Procédé de commande du mouvement horizontal, vertical et diagonal du curseur sur un écran d'affichage (322) d'un dispositif de communication (300), à l'aide d'un outil de navigation à base de bille de commande (328), ledit procédé comprenant les étapes consistant à :
faire tourner une bille de commande (121) de l'outil de navigation à base de bille de commande (328) ;
détecter la rotation de la bille de commande (121) de l'outil de navigation à base de bille de commande (328) à l'aide d'au moins un des huit détecteurs de direction de rotation de la bille de commande (160, 162, 164, 166, 170, 172, 174, 176), dans lequel chacun des huit détecteurs de direction de rotation (160, 162, 164, 166, 170, 172, 174, 176) est destiné à détecter la rotation de la bille de commande (121) respectivement dans la direction verticale, horizontale ou diagonale et dans lequel les huit détecteurs de direction de rotation (160, 162, 164, 166, 170, 172, 174, 176) sont écartés radialement d'un centre de la bille de commande (121), si bien qu'il existe un angle central de quarante-cinq degrés entre des détecteurs de direction de rotation adjacents et chacun desdits détecteurs de direction de rotation de la bille de commande (160, 162, 164, 166, 170, 172, 174, 176) comprend un galet qui entre en contact avec la bille de commande (121) de l'outil de navigation à base de bille de commande (328) et qui peut tourner autour de son axe de rotation ;
produire en sortie des signaux de rotation corrélés à la rotation détectée de la bille de commande (121) de l'outil de navigation à base de bille de commande (328) ;
comparer directement les signaux de rotation produits en sortie ;
déterminer si les signaux de rotation correspondent principalement à un mouvement vertical, horizontal ou diagonal de la bille de commande (121) sur la base de la comparaison directe des signaux de rotation produits en sortie ;
produire en sortie des signaux de commande du curseur, sur la base du mouvement principal déterminé de la bille de commande (121), afin d'indiquer un mouvement vertical, horizontal ou diagonal correspondant du curseur (181) sur l'écran d'affichage (322) ; et
déplacer le curseur (181) sur l'écran d'affichage (322) dans une direction correspondant aux signaux de commande du curseur.
